# EUROPEAN PATENT SPECIFICATION

(11) **EP 1 773 083 B1**
(45) Date of publication and mention of the grant of the patent: **01.09.2010**
(21) Application number: 05256217.0
(22) Date of filing: 05.10.2005
(51) Int. Cl.: H04W 24/02

(54) **Deployment scheduling for a mobile communication network to be changed to a target network plan comprising BSC areas and location areas**
Umsetzungsplanung für die Umwandlung eines Mobilfunknetzes hin zu einem BSC-Bereich und Lokalisierungszonen umfassenden Ziel-Netzwerkplan
Etablissement du déploiement pour le changement d'un réseau de communication mobile par rapport à un plan de réseau destiné comportant des régions de BSC et des zones de localisation

(43) Date of publication of application: 11.04.2007
(73) Proprietor: Groundhog Technologies Inc., Cambridge, MA 02142 (US)
(72) Inventor: Chen, Meng-Seng, Taipei City 105 (TW); Chen, Yuan-Pai, Sindian City Taipei County 231 (TW); Yeh, Chun-Chih, Sindian City Taipei County 231 (TW)
(74) Representative: Pratt, David Martin

(56) References cited:
- WO-A-2005/018259
- GB-A- 2 357 396
- US-A1- 2002 123 338
- US-A1- 2005 097 161
- US-B1- 6 311 067

## Description

### BACKGROUND OF INVENTION

### 1. FIELD OF THE INVENTION

The present invention relates to a mobile communication network, and more particularly, to a method for deployment scheduling for the mobile communication network.

### 2. DESCRIPTION OF THE PRIOR ART

Typically, a mobile communication network is partitioned into a plurality of partition areas to facilitate mobility management. The partition areas form a network plan. In some kinds of mobile networks, a multi-layer partitioning structure is applied. The multi-layer structure has a hierarchy of partition layers, where each partition layer is composed of one or more corresponding partition areas. For example, a GSM (i.e. Global System for Mobile communication) network may employ a multi-layer structure that includes the partition layers of BTS (i.e. base transceiver station) area, BSC (i.e. base station controller) area, location area, and MSC (i.e. mobile switching center) area, from down to top.

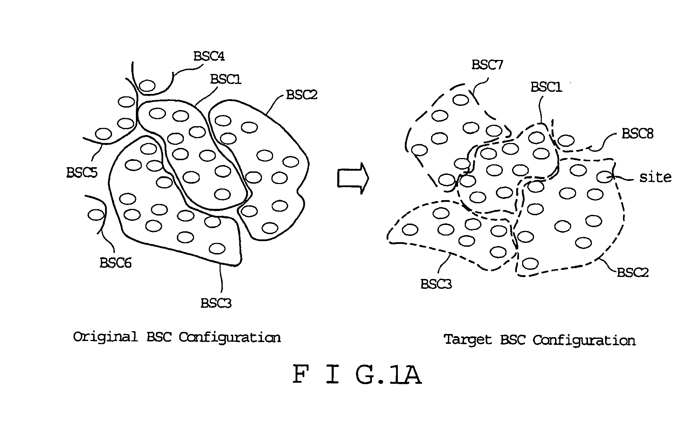

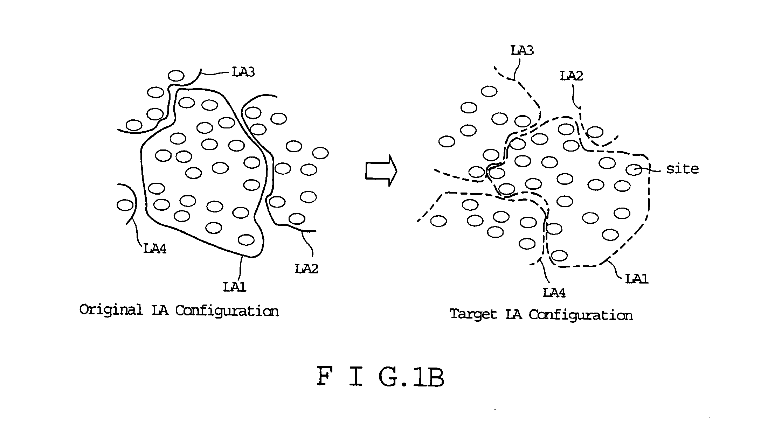

When a mobile network in operation needs to reconfigure its network plan, i.e. to change from an original network plan into a target one, it is necessary to keep the network in normal condition during the network reconfiguration. Thus, the reconfiguration should be deployed in a progressive manner, and the issue of deployment scheduling is introduced here. The deployment scheduling determines the sequence in which the mobile network changes toward the target network plan step by step. Fig.1A and 1B show an example of reconfiguration for a mobile network with the partition layers of BTS area, BSC area and location area (LA). Fig.1A shows the original and target BSC configuration of the mobile network, while Fig.1B shows the original and target LA configuration of the mobile network. As shown in Fig. 1A and 1B, there are one or more BTSs (or sites) within each BSC area and location area.

However, the conventional technology does not provide a systematic and objective solution for network operators to proceed deployment scheduling. Thus, it depends on the subjective experience of the operators or the try-and-error way to handle this issue. Usually, this approach may cause area disconnectivity and network overloading during the deployment. The area disconnectivity means that a partition area is separated into two or more individual parts, and this would increase the load of the network and raise the risk of overloading. For example, the disconnectivity of a location area would increase the number of times of location updates. Besides, the overloading may occur due to an improper order of moving sites between the partition areas. For example, a heavy-loaded BSC area may be overloaded since moving sites thereto is performed before moving sites therefrom.

The prior art is exemplified by US 2005/097161 and WO 2005/018259.

### SUMMARY OF INVENTION

It is therefore an aim of the present invention to provide a method for deployment scheduling of a mobile communications network, thereby reducing the possibility of area disconnectivity and network overloading during the deployment.

Another aim of the present invention is to provide a method for changing a mobile communications network from a first network plan into a second network plan, thereby reducing the possibility of area disconnectivity and network overloading during the process of changing.

The present invention provides a method for deployment scheduling a mobile communications network to be changed from a first network plan to a second network plan, both the first and second network plans comprising a plurality of base station controller, BSC, areas and location areas, the method comprising the steps of:
(a) selecting a BSC area from a current network plan of the mobile communications network;
(b) performing a site movement from each source neighbouring BSC area of the selected BSC area to the selected BSC area if the selected BSC area is empty;
(c) performing a site movement from each source neighbouring BSC area of the selected BSC area to the selected BSC area if the selected BSC area contains at least one unchangeable site, wherein the site movement includes moving a site neighbouring to the unchangeable site from the source neighbouring BSC area to the selected BSC area, and changing a location area code, LAC, of the moved site to a LAC of the unchangeable site if those LACs are different; and
(d) performing a site movement from a source neighbouring BSC area of the selected BSC area to the selected BSC area according to current location area configuration of first sites within the selected BSC area if the selected BSC area is not empty and contains no unchangeable site, wherein the first sites are neighbouring to a second site of the source neighbouring BSC area targeted to the selected BSC area.

### BRIEF DESCRIPTION OF THE DRAWINGS

Fig.1A and 1B show an example of reconfiguration for a mobile network with the partition layers of BTS area, BSC area and location area (LA).
Fig.2 is a flow chart of a preferred embodiment of the method for deployment scheduling for a mobile communication network according to the present invention.
Fig.3A to 3C are diagrams showing an example of performing a site movement while maintaining BSC area connectivity.
Fig.4A to 4C are diagrams showing an example of performing step 22 for an empty BSC area having the first neighboring BSC area.
Fig.5A to 5C are diagrams showing an example of performing step 22 for an empty BSC area without the first neighboring BSC area.
Fig.6A to 6C are diagrams showing an example of performing step 22 for an empty BSC area with a new LAC as the target LAC.
Fig.7A to 7C are diagrams showing an example of performing step 24.
Fig.8A to 8C are diagrams showing an example of performing step 25 for case 1.
Fig.9A to 9C are diagrams showing an example of performing step 25 for case 2.
Fig.10A and 10B are diagrams showing an example of performing step 27.

### DETAILED DESCRIPTION

Though the embodiments described below may take a GSM network for example, people skilled in the art can easily apply technological features of the present invention to other mobile communication networks. Thus, the scope of the present invention is not limited to the GSM network.

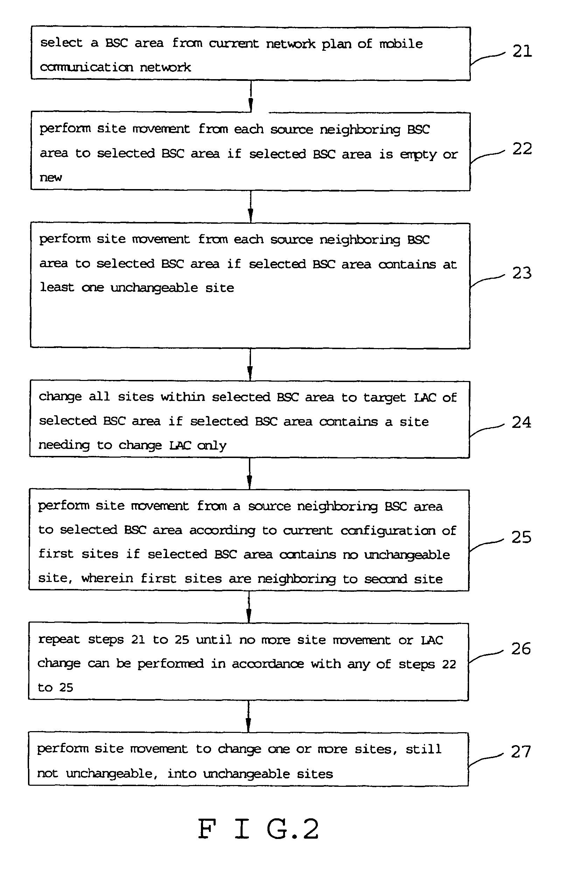

Fig.2 is a flow chart of a preferred embodiment of the method for deployment scheduling for a mobile communication network according to the present invention. The mobile communication network is to be changed from a first network plan (or original network plan) to a second network plan (or target network plan). Both the first and second network plans comprises a plurality of BSC areas and location areas.

Before detailing the embodiment, the definition for several terms is made as follows. A site movement means to change the configuration of one or more sites at a time. The configuration of a site indicates which area the site belongs to on each partition layer (i.e. BSC area and location area for the embodiment of Fig.2). Unless specified otherwise, the site movement means to change the site from a current configuration to a target configuration as in the target network plan. An unchangeable site means both the current and target configuration of the site is the same. A neighbor site of a specific site, i.e. a site neighboring to the specific site, means the site capable of performing handover operation to the specific site. A neighbor family of a specific site include the sites each satisfying two conditions: (a) capable of performing handover operation, with or without any intermediary site, to the specific site; and (b) staying in the same current BSC area and targeted to the same BSC area as the specific site. A source neighboring BSC area of a specific BSC area includes one or more sites targeted to the specific BSC area.

As shown in Fig.2, the flow comprises steps of:
21 selecting a BSC area from the current network plan of the mobile communication network;
22 performing a site movement from each source neighboring BSC area of the selected BSC area to the selected BSC area if the selected BSC area is empty or new;
23 performing a site movement from each source neighboring BSC area of the selected BSC area to the selected BSC area if the selected BSC area contains at least one unchangeable site;
24 changing all sites within the selected BSC area to a target location area code (LAC) of the selected BSC area if the selected BSC area contains at least one site which needs to change LAC only;
25 performing a site movement from a source neighboring BSC area of the selected BSC area to the selected BSC area according to current configuration of first sites within the selected BSC area if the selected BSC area does not contain any unchangeable site, wherein the first sites are neighboring to a second site of the source neighboring BSC area targeted to the selected BSC area;
26 repeating steps 21 to 25 until no more site movement or LAC change can be performed in accordance with any of steps 22 to 25; and
27 performing a site movement to change one or more sites, which are still not unchangeable sites, into unchangeable sites.

In the embodiment of Fig.2, if any site movement is predicted to cause the network overloaded, it will not be performed, thereby securing the network quality during the deployment. The network overloading occurs when one or more network parameters exceed their limits. Thus, these limits can serve as network loading constraints for the site movement. During the flow of Fig.2, network parameters associated with each level of BSC, LA and MSC are monitored. The BSC level parameters include BSC El Link, TRX, Erlang, BSC CPU loading, paging, BHCA (busy hour call attempts), etc. of each BSC. The LA level parameters include total paging of each LA. The MSC level parameters include MSC El Link, Erlang, MSC CPU loading, paging, BHCA, etc. of each MSC. The network parameters mentioned above are well known to the skilled in the art, and would not be described in detail here. Based on the monitored parameters, it can be accurately predicted whether a site movement will cause the network overloaded or not. In one embodiment, in each site movement, a site is moved along with its neighbor family, thereby performing the network deployment more efficiently.

In addition to the network loading constraints, a site movement should meet a work loading constraint for the deployment. In one embodiment, the work loading constraint defines how many site movements and LAC changes can be performed in a period of time according to the labor power provided for the deployment. The work loading constraint also serves to keep the network from drastic change.

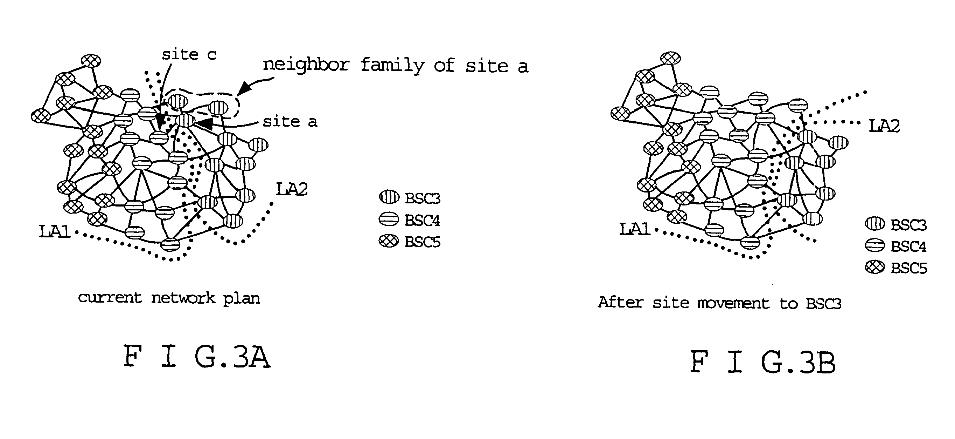

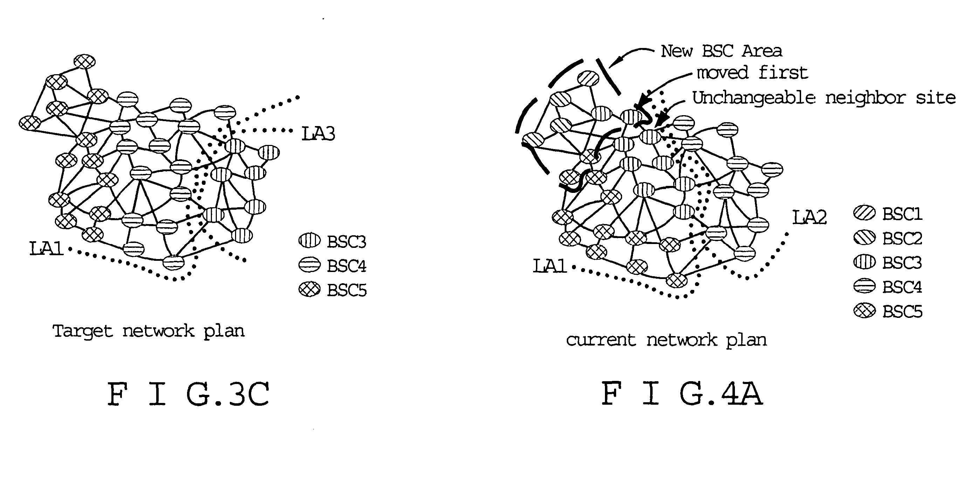

In both steps 22 and 23, the site movement from each source neighboring BSC area to the selected BSC area is performed such that each moved-in site becomes an unchangeable site neighboring to another unchangeable site of the selected BSC area. In this manner, the selected BSC area can maintain both BSC connectivity and LA connectivity. Fig.3A to 3C show an example for this. By comparing both the current and target network plans, it can be determined whether a site within the current network plan is an unchangeable site, a site needing to change LAC only, or else. In Fig.3A, in the current network plan, the selected BSC area is BSC4 having an unchangeable site (e.g. site c). Thus, step 22 is performed to move site a and its neighbor family from BSC3 (source neighboring BSC area) to BSC4, as shown in Fig.3B. It is notable that both BSC connectivity and LA connectivity for BSC4 is maintained after the site movement. In one embodiment, if the selected BSC area has several source neighboring BSC areas for performing the site movement, then the source neighboring BSC areas are processed in an order determined according to their respective loading. For example, the source neighboring BSC area with a higher loading is processed prior to that with a lower loading.

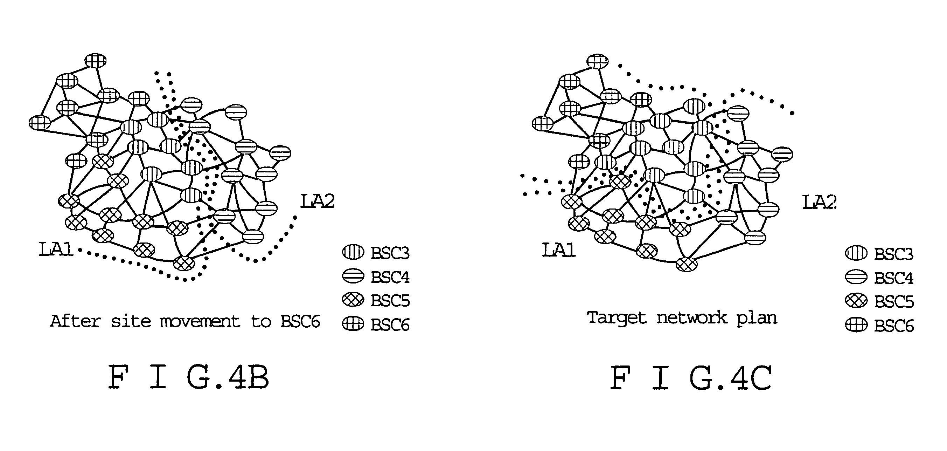

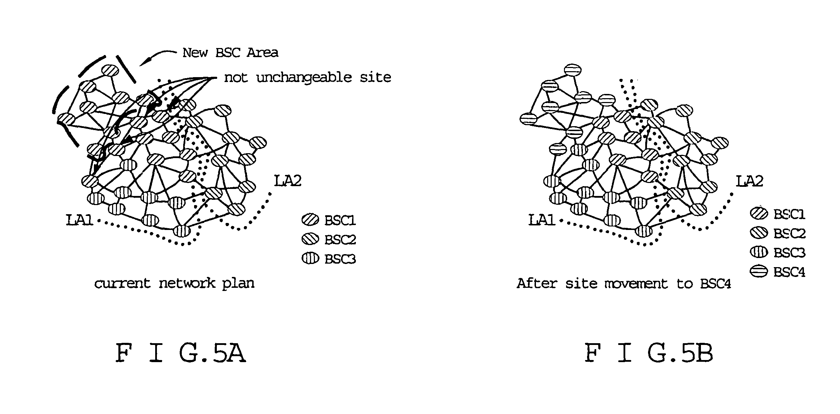

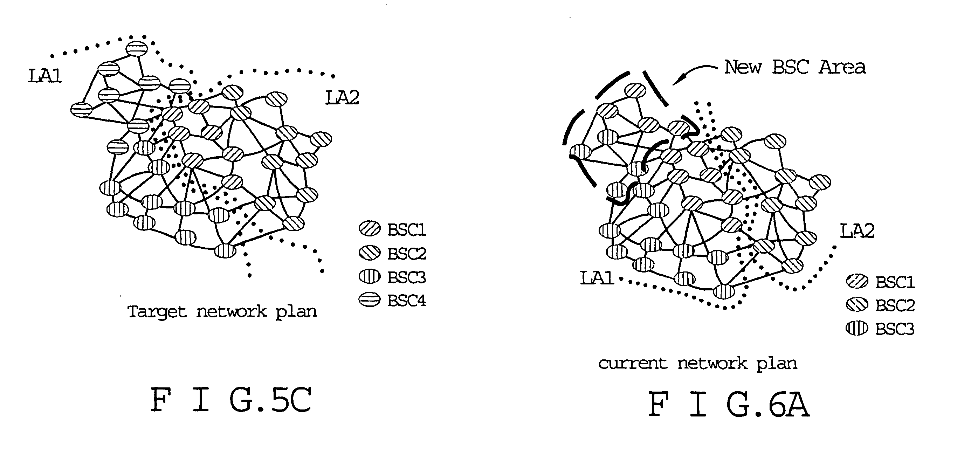

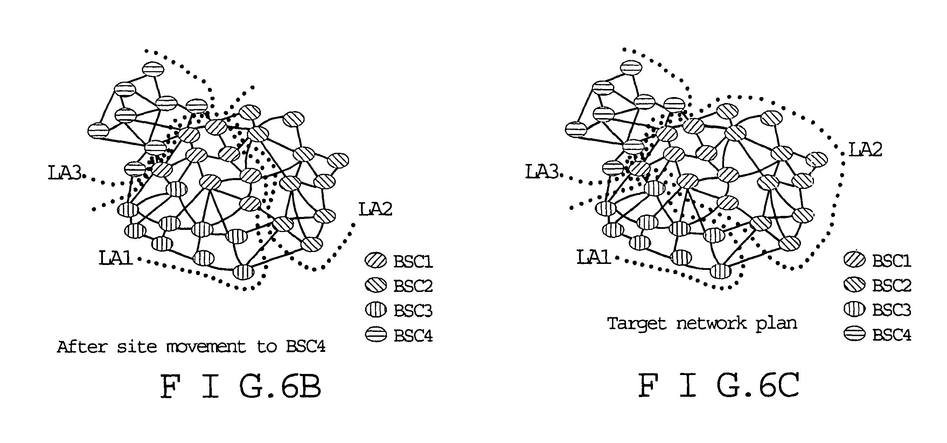

In step 22, if a first neighboring BSC area of the selected BSC area contains an unchangeable site which is neighboring to the selected BSC area and has a same LAC as a target LAC of the selected BSC area, then the site(s) neighboring to the unchangeable site and targeted to the selected BSC area is moved first. In this manner, the selected BSC area is connected to an existing LA through the unchangeable site, thereby securing the LA connectivity for the selected BSC area. Fig.4A to 4C are diagrams showing an example of performing step 22 for an empty BSC area having the first neighboring BSC area. In Fig.4A, the current network plan contains a new BSC area, and the neighboring BSC area (i.e. BSC3) contains an unchangeable site, the neighbor site of which would be moved first. Fig.4B shows the result after all sites are moved into the new BSC area (i.e. BSC6). On the other hand, an example of performing step 22 for an empty BSC area without the first neighboring BSC area is shown in Fig.5A to 5C (i.e. the empty BSC area is BSC4), and an example of performing step 22 for an empty BSC area with a new LAC as the target LAC is shown in Fig.6A to 6C (i.e. the empty BSC area is BSC4 and the new LAC is LAC3).

In step 23, if the selected BSC area and another BSC area containing at least one unchangeable site are both a source neighboring BSC area to each other, then a two-way site movement between the selected BSC area and the another BSC area (i.e. these two BSC areas exchange their sites) is performed to increase the efficiency of the deployment.

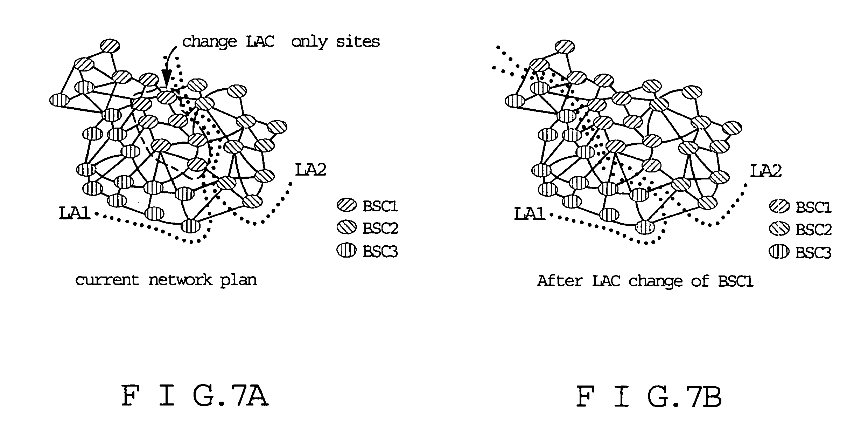

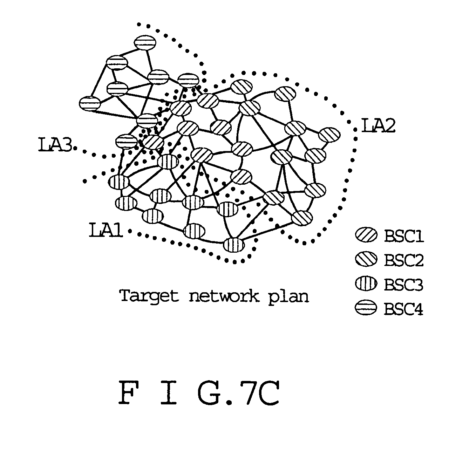

In step 24, the objective of the LAC change is to create one or more unchangeable sites for the selected BSC area. The number of created unchangeable sites depends on the number of the sites needing to change LAC only within the selected BSC area. Fig.7A to 7C are diagrams showing an example of performing step 24. In Fig.7A, the current network plan includes BSC1 which contains seven change-LAC-only sites (target LAC is LAC2, as shown in Fig.7C). Fig.7B shows the result after performing the LAC change for BSC1.

In step 25, there are two cases to be considered:

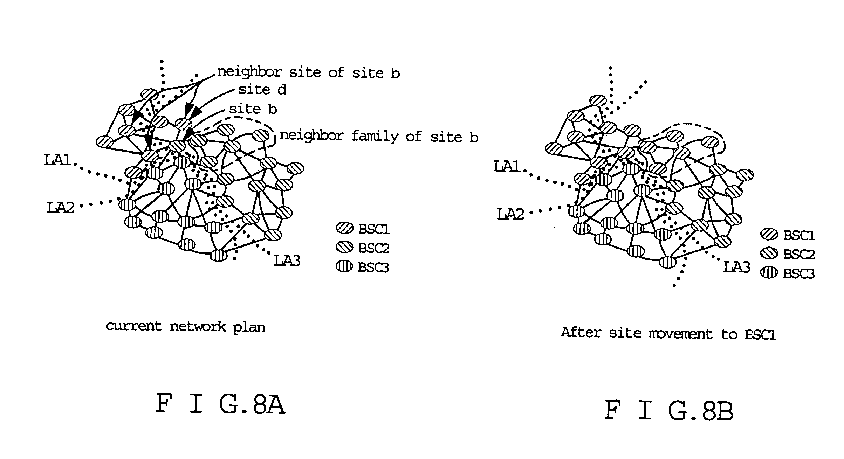

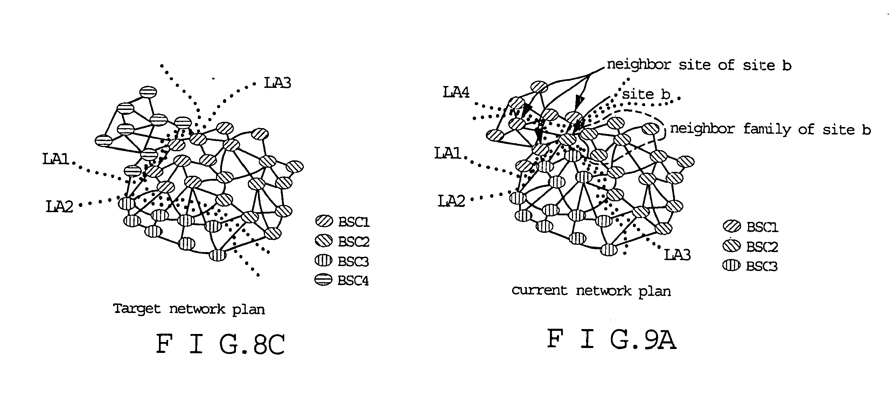

Case 1: If one of the first sites has a LAC the same as a target LAC of the second site, then the second site and its neighbor family are moved into the selected BSC area and set to the target LAC of the second site. In this manner, the second site and its neighbor family are turned into unchangeable sites within the selected BSC area, and both BSC connectivity and LA connectivity can be maintained since the second site is neighboring to the first sites. Fig.8A to 8C are diagrams showing an example of performing step 25 for case 1. The selected BSC area is BSC1. As shown in Fig.8A, in the current network plan, site d (first site) is neighboring to site b (second site) and has a LAC (i.e. LAC3) the same as the target LAC of site b (cf. Fig.8C), which is the same as the current LAC of site b. Thus, site b and its neighbor family are moved into BSC1 without LAC change, as shown in Fig.8B.

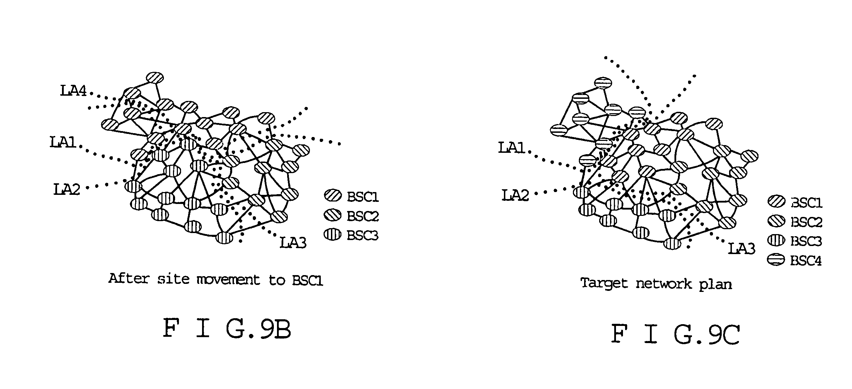

Case 2: If none of the first sites has a LAC the same as the target LAC of the second site, then the second site and its neighbor family are moved into the selected BSC area and set to a LAC selected from current LACs of the first sites according to respective paging loads for the current LACs. In this case, the second site and its neighbor family need another LAC change to reach their target LAC. The selected LAC, for example, may be the one with lowest paging load, thereby reducing the possibility of a potential paging overload caused by the LAC change of the second site and its neighbor family. It is notable that if the current LACs of the first sites are the same, the LACs of the second site and its neighbor family are set to the same LAC. Fig.9A to 9C are diagrams showing an example of performing step 25 for case 2. The selected BSC area is BSC1. By comparing Fig.9A and 9C, it is obvious that none of the neighbor sites (first sites) of site b (second site) has a LAC the same as the target LAC (i.e. LAC3) of site b. The current LACs of the first sites are LAC1 and LAC4, and the paging load for LAC4 is assumed higher than that for LAC1. Accordingly, site b and its neighbor family are moved into BSC1 and set to LAC4, as shown in Fig.9B.

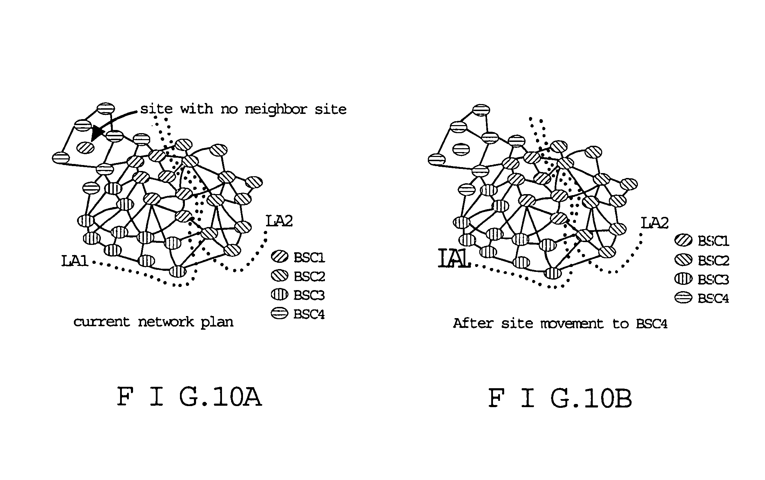

In step 26, steps 21 to 25 are repeated to make each BSC area contain more unchangeable sites, thereby progressively changing the mobile network toward the target network plan. The sites, which are still not unchangeable after step 26, include those without any neighbor site. Thus, in step 27, a site movement for these sites is performed to change them into unchangeable sites. Fig.10A and 10B are diagrams showing an example of performing step 27. Fig.10A shows a current network plan containing a site with no neighbor site, while Fig.10B shows the result after performing the site movement for the no-neighbor site.

In step 21, the selection is made according to a priority level of each BSC area within the current network plan. A BSC area with a higher priority level is selected prior to that with a lower one. The priority level of the BSC area may be varied since the BSC configuration changes continuously during the network deployment. In one embodiment, the priority level of an empty (or new) BSC area with the first neighboring BSC area (see Fig.4) is highest. In addition, the priority level of an empty BSC area with a new LAC as the target LAC (cf. Fig.6A) is higher than that of an empty BSC area with no first neighboring BSC area (cf. Fig.5A). On the other hand, the priority level of a BSC area, which contains no unchangeable site and contains a site needing to change LAC only, is lower than that of a BSC area containing at least one unchangeable site, while higher than that of a non-empty BSC area containing no unchangeable site. In this embodiment, a BSC area with a lower priority level may turn into that with a higher one during the deployment, and the site movement for the latter has better effects (e.g. better area connectivity) than the former.

In another embodiment, the sequence of priority level from high to low is as follows: an empty BSC area with the first neighboring BSC area, a BSC area containing at least one unchangeable site, an empty BSC area with a new LAC as the target LAC, a BSC area containing no unchangeable site and containing a site needing to change LAC only, a non-empty BSC area containing no unchangeable site, and an empty BSC area with no first neighboring BSC area.

In the embodiment of Fig.2, the target network plan is generated according to a partitioning algorithm. The partitioning algorithm provides a refined or optimized network plan so as to reduce the load of the mobile network and upgrade the network performance accordingly. In one embodiment, if a site movement for a plurality of sites does not meet some specific constraint(s) such as network loading constraint or work loading constraint mentioned above, then a partitioning algorithm can be used to divide the plurality of sites into two parts with the load reduced as much as possible, where the site movement for one of the two parts, which contains site(s) neighboring to the targeted BSC area, satisfies the specific constraint(s). Thus, the part containing those neighboring site(s) should then be moved first. The applicable partitioning algorithms include, but are not limited to, K-L (Kernighan-Lin) algorithm and F-M (Fiduccia-Mattheyses) algorithm. For information on K-L algorithm, please refer to "An Efficient Heuristic Procedure for Partitioning Graphs" (The Bell system technical journal, 49(1):291-307, 1970). For information on F-M algorithm, please refer to "A Linear-Time Heuristic for Improving Network Partitions" (Proc. of DAC, 1982).

It is notable that all the above embodiments can be applied to any mobile network with a partitioning structure equivalent to that of a GSM network, such as CDMA 2000, GPRS (i.e. General Packet Radio Service), etc. In CDMA 2000, centralized base station controller (CBSC) is equivalent to BSC, and zone is equivalent to location area. In GPRS, packet control unit (PCU), registration area and serving GPRS support node (SGSN) are equivalent to BSC, location area and MSC, respectively.

While the present invention has been shown and described with reference to the preferred embodiments thereof and in terms of the illustrative drawings, it should not be considered as limited thereby. Various possible modifications and alterations could be conceived of by one skilled in the art to the form and the content of any particular embodiment.

## Claims

1. A method for deployment scheduling a mobile communications network to be changed from a first network plan to a second network plan, both the first and second network plans comprising a plurality of base station controller, BSC, areas and location areas, the method comprising the steps of:
(a) selecting (step 21) a BSC area from a current network plan of the mobile communications network;
(b) performing (step 22) a site movement from each source neighbouring BSC area of the selected BSC area to the selected BSC area if the selected BSC area is empty;
(c) performing (step 23) a site movement from each source neighbouring BSC area of the selected BSC area to the selected BSC area if the selected BSC area contains at least one unchangeable site, wherein the site movement includes moving a site neighbouring to the unchangeable site from the source neighbouring BSC area to the selected BSC area, and changing a location area code, LAC, of the moved site to a LAC of the unchangeable site if those LACs are different; and
(d) performing (step 25) a site movement from a source neighbouring BSC area of the selected BSC area to the selected BSC area according to current location area configuration of first sites within the selected BSC area if the selected BSC area is not empty and contains no unchangeable site, wherein the first sites are neighbouring to a second site of the source neighbouring BSC area targeted to the selected BSC area.

2. A method as claimed in claim 1, wherein a site movement comprises moving a site and a neighbour family thereof from a source neighbouring BSC area of the selected BSC area to the selected BSC area.

3. A method as claimed in claim 1 or claim 2, wherein step (a) is executed according to a priority level of each BSC area within the current network plan.

4. A method as claimed in claim 3, wherein the priority level of an empty BSC area with a first neighbouring BSC area is highest, and the priority level of an empty BSC area with a new LAC as a target LAC is higher than that of an empty BSC area with no first neighbouring BSC area, wherein the first neighbouring BSC area contains an unchangeable site which is neighbouring to the empty BSC area, and has the same LAC as a target LAC of the empty BSC area.

5. A method as claimed in claim 3, wherein the priority level of a BSC area containing at least one unchangeable site is higher than that of a non-empty BSC area containing no unchangeable site.

6. A method as claimed in any one of claims 1 to 5, further comprising, prior to step (d),
(d0) changing sites within the selected BSC area to a target LAC of the selected BSC area if the selected BSC area contains at least one site which needs to change LAC only.

7. A method as claimed in any one of claims 1 to 6, wherein, in step (d), if one of the first sites has the same LAC as a target LAC of the second site, the second site is moved into the selected BSC area and set to the target LAC of the second site; and, if none of the first sites has the same LAC as a target LAC of the second site, the second site is moved into the selected BSC area and set to a LAC selected from current LACs of the first sites according to respective paging loads for the current LACs.

8. A method as claimed in any one of claims 1 to 7, wherein, if a site movement comprises moving a plurality of sites, the plurality of sites are moved in an order determined according to a partitioning algorithm.

## Patentansprüche

1. Verfahren zur Umsetzungsplanung eines Mobilfunknetzes, das von einem ersten Netzwerkplan hin zu einem zweiten Netzwerkplan geändert werden soll, wobei sowohl der erste als auch der zweite Netzwerkplan eine Vielzahl von Basisstationssteuerungsbereichen, BSC-Bereiche, und Aufenthaltsbereichen enthält, wobei das Verfahren die folgenden Schritte enthält:
(a) Auswählen (Schritt 21) eines BSC-Bereichs aus einem aktuellen Netzwerkplan des Mobilfunknetzes,
(b) Ausführen (Schritt 22) einer Standortbewegung von jedem dem ausgewählten BSC-Bereich quellenbenachbarten BSC-Bereich zum ausgewählten BSC-Bereich, wenn der ausgewählte BSC-Bereich leer ist,
(c) Ausführen (Schritt 23) einer Standortbewegung von jedem dem ausgewählten BSC-Bereich quellenbenachbarten BSC-Bereich zum ausgewählten BSC-Bereich, wenn der ausgewählte BSC-Bereich wenigstens einen unveränderlichen Standort enthält, wobei die Standortbewegung die Bewegung eines dem unveränderlichen Standort benachbarten Standorts vom quellenbenachbarten BSC-Bereich zum ausgewählten BSC-Bereich und Änderung eines Aufenthaltsbereichscodes, LAC, des bewegten Standorts in einen LAC des unveränderlichen Standorts enthält, wenn diese LACs unterschiedlich sind, und
(d) Ausführen (Schritt 25) einer Standortbewegung von einem quellenbenachbarten BSC-Bereich zum ausgewählten BSC-Bereich entsprechend der aktuellen Aufenthaltsbereichskonfiguration von ersten Standorten innerhalb des ausgewählten zweiten BSC-Bereichs, wenn der ausgewählte BSC-Bereich nicht leer ist und keine unveränderlichen Standorte enthält, wobei die ersten Standorte einem zweiten Standort des quellenbenachbarten BSC-Bereichs benachbart sind, der auf den ausgewählten BSC-Bereich gerichtet ist.

2. Verfahren nach Anspruch 1, bei dem eine Standortbewegung die Bewegung eines Standorts und einer Nachbarfamilie davon von einem dem ausgewählten BSC-Bereich quellenbenachbarten BSC-Bereich zum ausgewählten BSC-Bereich enthält.

3. Verfahren nach Anspruch 1 oder Anspruch 2, bei dem Schritt (a) gemäß einem Prioritätslevel eines jeden BSC-Bereichs innerhalb des aktuellen Netzwerkplans ausgeführt wird.

4. Verfahren nach Anspruch 3, bei dem der Prioritätslevel eines leeren BSC-Bereichs mit einem ersten benachbarten BSC-Bereich der höchste ist und der Prioritätslevel eines leeren BSC-Bereichs mit einem neuen LAC als Ziel-LAC höher ist als der eines leeren BSC-Bereichs ohne ersten benachbarten BSC-Bereich, wobei der erste benachbarte BSC-Bereich einen unveränderlichen Standort enthält, der dem leeren BSC-Bereich benachbart ist, und die gleiche LAC wie ein Ziel-LAC des leeren BSC-Bereichs aufweist.

5. Verfahren nach Anspruch 3, bei dem der Prioritätslevel eines wenigstens einen unveränderlichen Standort enthaltenden BSC-Bereichs höher ist als der eines keinen unveränderlichen Standort enthaltenden, nicht leeren BSC-Bereichs.

6. Verfahren nach einem der Ansprüche 1 bis 5, das ferner vor Schritt (d) enthält:
(d0) Ändern von Standorten innerhalb des ausgewählten BSC-Bereichs auf einen Ziel-LAC des ausgewählten BSC-Bereichs, wenn der ausgewählte BSC-Bereich wenigstens einen Standort enthält, bei dem nur der LAC geändert werden muss.

7. Verfahren nach einem der Ansprüche 1 bis 6, bei dem in Schritt (d), wenn einer der ersten Standorte den gleichen LAC wie der Ziel-LAC des zweiten Standorts aufweist, der zweite Standort in den ausgewählten BSC-Bereich bewegt und auf den Ziel-LAC des zweiten Standorts festgesetzt wird, und wenn keiner der ersten Standorte den gleichen LAC wie der Ziel-LAC des zweiten Standorts aufweist, der zweite Standort in den ausgewählten BSC-Bereich bewegt und auf einen aus den aktuellen LACs der ersten Standorte ausgewählten LAC gemäß der jeweiligen Funkrufbelastung für die aktuellen LACs festgesetzt wird.

8. Verfahren nach einem der Ansprüche 1 bis 7, bei dem, wenn eine Standortbewegung die Bewegung einer Vielzahl von Standorten enthält, die Vielzahl von Standorten in einer Reihenfolge bewegt werden, die gemäß einem Partitionierungsalgorithmus bestimmt wird.

## Revendications

1. Procédé d'établissement de déploiement d'un réseau de communication mobile devant être changé d'un premier plan de réseau à un second plan de réseau, les deux premier et second plans de réseau comprenant une pluralité de régions de contrôleurs de station de base, BSC, et de zones de localisation, le procédé comprenant les étapes consistant à :
(a) sélectionner (étape 21) une région de BSC à partir d'un plan de réseau courant du réseau de communication mobile ;
(b) effectuer (étape 22) un mouvement de site depuis chaque région de BSC avoisinant la source de la région de BSC sélectionnée vers la région de BSC sélectionnée si la région de BSC sélectionnée est vide ;
(c) effectuer (étape 23) un mouvement de site depuis chaque région de BSC avoisinant la source de la région de BSC sélectionnée vers la région de BSC sélectionnée si la région de BSC sélectionnée contient au moins un site inchangeable, le mouvement du site comprenant le mouvement d'un site avoisinant le site inchangeable depuis la zone de BSC avoisinant la source vers la zone de BSC sélectionnée, et changer un code de région de localisation, LAC, du site déplacé en un LAC du site inchangeable si ces LAC sont différents ; et
(d) effectuer (étape 25) un mouvement de site depuis une région de BSC avoisinant la source de la région de BSC sélectionnée vers la région de BSC sélectionnée selon la configuration de région de localisation courante de premiers sites à l'intérieur de la région de BSC sélectionnée si la région de BSC sélectionnée n'est pas vide et ne contient aucun site inchangeable, les premiers sites avoisinant un second site de la région de BSC avoisinant la source ciblé sur la région de BSC sélectionnée.

2. Procédé selon la revendication 1, dans lequel un mouvement de site comprend le mouvement d'un site et d'une famille voisine de celui-ci depuis une région de BSC avoisinant la source de la région de BSC sélectionnée vers la région de BSC sélectionnée.

3. Procédé selon la revendication 1 ou la revendication 2, dans lequel l'étape (a) est exécutée selon un niveau de priorité de chaque région de BSC à l'intérieur du plan de réseau courant.

4. Procédé selon la revendication 3, dans lequel le niveau de priorité d'une région de BSC vide avec une première région de BSC voisine est le plus élevé, et le niveau de priorité d'une région de BSC vide avec un nouveau LAC en tant que LAC cible est plus élevé que celui d'une région de BSC vide sans première région de BSC voisine, dans lequel la première région de BSC voisine contient un site inchangeable qui est voisin de la région de BSC vide, et a le même LAC qu'un LAC cible de la région de BSC vide.

5. Procédé selon la revendication 3, dans lequel le niveau de priorité d'une région de BSC contenant au moins un site inchangeable est plus élevé que celui d'une région de BSC non vide ne contenant aucun site inchangeable.

6. Procédé selon l'une quelconque des revendications 1 à 5, consistant en outre, avant l'étape (d), à
(d0) faire passer les sites à l'intérieur de la région de BSC sélectionnée à un LAC cible de la région de BSC sélectionnée si la région de BSC sélectionnée contient au moins un site qui doit uniquement changer de LAC.

7. Procédé selon l'une quelconque des revendications 1 à 6, dans lequel, dans l'étape (d), si un des premiers sites a le même LAC qu'un LAC cible du second site, le second site est déplacé dans la région de BSC sélectionnée et défini au LAC cible du second site ; et, si aucun des premiers sites n'a le même LAC qu'un LAC cible du second site, le second site est déplacé dans la région de BSC sélectionnée et défini au LAC sélectionné parmi les LAC courants des premiers sites selon des charges de radiomessagerie respectives pour les LAC courants.

8. Procédé selon l'une quelconque des revendications 1 à 7, dans lequel, si un mouvement de site comprend le déplacement d'une pluralité de sites, la pluralité de sites sont déplacés dans un ordre déterminé selon un algorithme de partitionnement.
